# EUROPÄISCHE PATENTANMELDUNG

(11) **EP 0 769 441 A2**
(43) Veröffentlichungstag der Anmeldung: **23.04.1997**
(21) Anmeldenummer: 96115811.0
(22) Anmeldetag: 02.10.1996
(51) Int. Cl.: B62D 1/10

(54) **Befestigung eines Fahrzeuglenkrades an einer Lenkwelle**

(30) Priorität: 20.10.1995 DE 29516626 U
(71) Anmelder: TRW Occupant Restraint Systems GmbH, 73551 Alfdorf (DE)
(72) Erfinder: Heilig, Alexander, 73550 Wissgoldingen (DE)
(74) Vertreter: Degwert, Hartmut, Dipl.-Phys.

(57) **Zusammenfassung**

Die Erfindung betrifft eine Befestigung eines Fahrzeuglenkrades an einer Lenkwelle, mit einer drehfesten Welle/Nabe-Verbindung zwischen einer Nabe (10) des Lenkrades und einem dem Lenkrad zugeordneten Ende der Lenkwelle (20) und mit einem Spannelement (30), welches eine in der Richtung der Längsachse der Lenkwelle (20) wirksame Formschlußverbindung zwischen der Nabe (10) und der Lenkwelle (20) bildet. Gemäß einem ersten Aspekt der Erfindung ist vorgesehen, daß das Spannelement eine Überwurfmutter (30) ist, die drehbar, aber axial gesichert auf der Lenkwelle (20) angebracht und mit der Nabe (10) auf deren Außenseite verschraubt ist. Gemäß einem zweiten Aspekt der Erfindung ist vorgesehen, daß das Spannelement eine Überwurfmutter (30) ist, die drehbar, aber axial gesichert an der Außenseite der Nabe (10) angebracht und mit der Lenkwelle (20) verschraubt ist.

## Beschreibung

Die Erfindung betrifft eine Befestigung eines Fahrzeuglenkrades an einer Lenkwelle, mit einer drehfesten Welle/Nabe-Verbindung zwischen einer Nabe des Lenkrades und einem dem Lenkrad zugeordneten Ende der Lenkwelle und mit einem Spannelement, welches eine in der Richtung der Längsachse der Lenkwelle wirksame Formschlußverbindung zwischen der Nabe und der Lenkwelle bildet.

An eine solche Befestigung werden üblicherweise die folgenden Anforderungen gestellt: Die Befestigung muß das Lenkrad fest und sicher mit der Lenkwelle verbinden, da ein unbeabsichtigtes Lösen dieser Verbindung schwerwiegende Folgen haben könnte. Weiterhin muß die Verbindung lösbar sein, so daß ein Austausch beispielsweise des Lenkrades möglich ist. Schließlich muß eine Justierung der Winkelausrichtung des Lenkrades relativ zur Lenkwelle möglich sein.

Bei der üblichen Befestigung des Lenkrades an der Lenkwelle wird für die drehfeste Welle/Nabe-Verbindung eine Keilwellenverbindung verwendet. Durch Aufstecken der mit einem Keilnabenprofil versehenen Nabe auf das als Keilwellenprofil ausgebildete Ende der Lenkwelle wird eine drehfeste Verbindung zwischen Lenkrad und Lenkwelle erzielt, deren Winkelausrichtung einstellbar ist. Für die Festlegung der Nabe an der Lenkwelle in deren axialer Richtung wird auf einen am genannten Ende der Lenkwelle ausgebildeten Gewindefortsatz von der Innenseite der Nabe aus eine Mutter aufgeschraubt, welche die Nabe mit der Lenkwelle verspannt. Somit ist das Lenkrad fest und sicher an der Lenkwelle befestigt.

Als Folge des in letzter Zeit gestiegenen Sicherheitsbewußtseins kommen vermehrt Gassack-Rückhaltesysteme zum Einsatz, die fahrerseitig im Innenraum der Nabe des Lenkrades angeordnet sind. Im Interesse einer rationellen Montage sollte ein solches Gassack-Rückhaltesystem dem Fahrzeughersteller bereits fertig im Lenkrad montiert geliefert werden. Dies hat aber zur Folge, daß durch die in die Nabe des Lenkrades eingebauten Komponenten des Gassack-Rückhaltesystems ein Zugang zu einem im Innenraum der Nabe angeordneten Spannelement schwierig oder unmöglich ist.

Daher ist es Aufgabe der Erfindung, eine Befestigung der eingangs genannten Art zu schaffen, bei der das Verbinden des Lenkrades mit der Lenkwelle vom Außenraum der Nabe aus erfolgen kann.

Zu diesem Zweck ist bei einer Befestigung der eingangs genannten Art gemäß einer ersten Ausführungsform der Erfindung vorgesehen, daß das Spannelement eine Überwurfmutter ist, die drehbar, aber axial gesichert auf der Lenkwelle angebracht und mit der Nabe auf deren Außenseite verschraubt ist. Gemäß einer zweiten Ausführungsform der Erfindung ist vorgesehen, daß das Spannelement eine Überwurfmutter ist, die drehbar, aber axial gesichert an der Außenseite der Nabe angebracht und mit der Lenkwelle verschraubt ist. Eine solche Überwurfmutter ist vom Außenraum der Nabe aus zugänglich, so daß das Lenkrad mit der Lenkwelle verbunden werden kann, nachdem in den Innenraum des Lenkrades beispielsweise die Komponenten eines Gassack-Rückhaltesystems eingebaut wurden.

Die Erfindung wird nachfolgend unter Bezugnahme auf die beigefügte Zeichnung erläutert. In dieser zeigen:
- Fig. 1 schematisch eine erste Ausführungsform einer erfindungsgemäße Befestigung eines Lenkrades an einer Lenkwelle; und
- Fig. 2 schematisch eine zweite Ausführungsform einer erfindungsgemäße Befestigung eines Lenkrades an einer Lenkwelle.

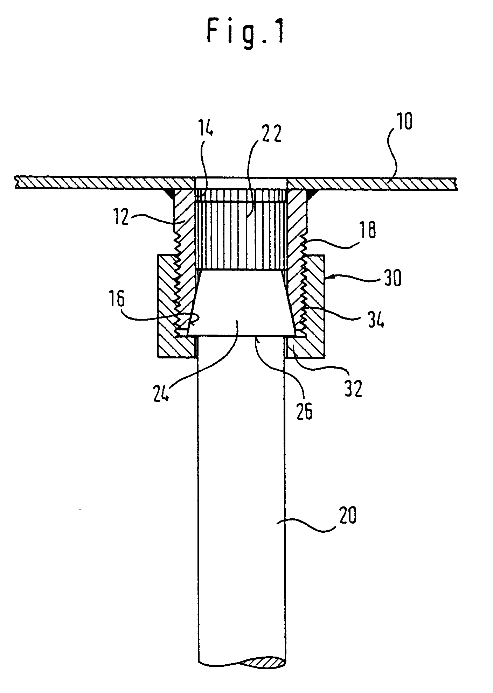

In Fig. 1 ist schematisch eine erste Ausführungsform der Erfindung dargestellt. Das (nicht dargestellte) Fahrzeuglenkrad enthält eine ausschnittsweise gezeigte Nabe 10, wobei der Innenraum der Nabe bezüglich der Figur oberhalb des dargestellten Abschnittes der Nabe 10 liegt. Auf der Außenseite weist die Nabe 10 eine Hülse 12 auf, deren Innenfläche an dem zur Nabe 10 gewandten Ende mit einem Keilnabenprofil 14 versehen ist. An ihrem entgegengesetzten, freien Ende weist die Hülse 12 einen Kegelsitz 16 auf. Auf der Außenseite ist die Hülse mit einem Außengewinde 18 versehen.

Das Fahrzeuglenkrad ist mit einer schematisch dargestellten Lenkwelle 20 verbunden. Diese weist an ihrem dem Lenkrad zugeordneten Ende ein Keilwellenprofil 22 auf. An das Keilwellenprofil 22 schließt sich auf der von dem Lenkrad abgewandten Seite ein Kegel 24 an, dessen kleine Basis einen Durchmesser hat, der etwa dem Durchmesser des Keilwellenprofils in den Nuten entspricht, und dessen große Basis einen Durchmesser aufweist, der größer als der Durchmesser des sich an diese große Basis anschließenden Abschnittes der Lenkwelle 20 ist. Somit ist am Übergang zwischen der Lenkwelle und dem Kegel auf der Seite seiner großen Basis ein kreisringförmiger Absatz 26 gebildet, der in einer zur Längsachse der Lenkwelle 20 senkrechten Ebene liegt und dessen Mittelpunkt auf dieser Längsachse liegt.

Auf der Lenkwelle 20 ist eine Überwurfmutter 30 angeordnet, deren Bund 32 sich an dem kreisringförmigen Absatz 26 abstützen kann. Der mit einem Innengewinde 34 versehene Abschnitt der Überwurfmutter ist zur Nabe 10 hin gerichtet. Das Innengewinde 34 ist zum Außengewinde 18 komplementär.

Das Fahrzeuglenkrad wird mit der Lenkwelle 20 in der folgenden Weise verbunden: Das Fahrzeuglenkrad wird auf das der Nabe 10 zugeordnete Ende der Lenkwelle 20 aufgesteckt, wobei das Keilnabenprofil der Nabe 10 in das Keilwellenprofil der Lenkwelle 20 eingreift. Gleichzeitig kommt der Kegel 24 in Anlage an den Kegelsitz 16. Dann wird die Überwurfmutter 30 auf das Außengewinde 18 der Nabe 10 aufgeschraubt und mit einem geeigneten Anzugsdrehmoment festgezogen. Damit ist das Fahrzeuglenkrad sicher und fest mit der Lenkwelle verbunden.

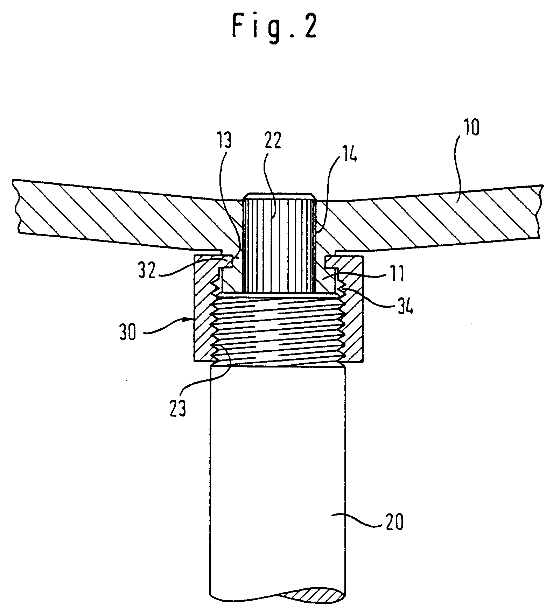

In Fig. 2 ist schematisch eine zweite Ausführungsform der Erfindung dargestellt. Soweit diese Ausführungsform mit der ersten Ausführungsform übereinstimmt, werden die gleichen Bezugszeichen verwendet.

Die ausschnittsweise dargestellte Nabe 10 weist auf ihrer Außenseite einen Fortsatz 11 auf, der auf seinem Außenumfang mit einer Umfangsnut 13 versehen ist. In dieser Umgangsnut 13 ist der Bund 32 einer Überwurfmutter 30 drehbar aufgenommen. Der mit einem Innengewinde 34 versehene Abschnitt der Überwurfmutter ist zur Lenkwelle 20 hin gerichtet. Mittig durch den Fortsatz 11 hindurch sowie durch die Nabe 10 erstreckt sich eine öffnung, die mit einem Keilnabenprofil 14 versehen ist.

Die schematisch dargestellte Lenkwelle 20 weist an ihrem dem Lenkrad zugeordneten Ende ein Keilwellenprofil 22 auf. An das Keilwellenprofil 22 schließt sich ein Abschnitt mit einem Außengewinde 23 an, welches zum Innengewinde 34 der Überwurfmutter 30 komplementär ist.

Das Fahrzeuglenkrad wird mit der Lenkwelle 20 in der folgenden Weise verbunden: Das Fahrzeuglenkrad wird auf das der Nabe 10 zugeordnete Ende der Lenkwelle 20 aufgesteckt, wobei das Keilnabenprofil der Nabe 10 in das Keilwellenprofil der Lenkwelle 20 eingreift. Dann wird die Überwurfmutter 30 auf das Außengewinde 23 der Lenkwelle 20 aufgeschraubt und mit einem geeigneten Anzugsdrehmoment festgezogen. Damit ist das Fahrzeuglenkrad sicher und fest mit der Lenkwelle verbunden.

Durch die Verwendung einer außerhalb der Nabe angebrachten Überwurfmutter für das Befestigen des Fahrzeuglenkrades an der Lenkwelle ist es nicht erforderlich, daß der Innenraum der Nabe zugänglich ist. Somit ergibt sich die Möglichkeit, in den Innenraum der Nabe des Lenkrades die entsprechenden Komponenten eines Gassack-Rückhaltesystems einzubauen, bevor das Lenkrad mit der Lenkwelle verbunden wird. Gemäß einer (nicht dargestellten) Weiterbildung kann die Lenkwelle hohl sein, so daß ein Gasgenerator in der Lenkwelle angeordnet werden kann, der dann über deren Innenraum mit dem Innenraum der Nabe in Verbindung steht, in der die entsprechenden Komponenten eines Gassack-Rückhaltesystems angeordnet sind.

## Patentansprüche

1. Befestigung eines Fahrzeuglenkrades an einer Lenkwelle,
mit einer drehfesten Welle/Nabe-Verbindung zwischen einer Nabe (10) des Lenkrades und einem dem Lenkrad zugeordneten Ende der Lenkwelle (20) und
mit einem Spannelement (30), welches eine in der Richtung der Längsachse der Lenkwelle (20) wirksame Formschlußverbindung zwischen der Nabe (10) und der Lenkwelle (20) bildet,
dadurch gekennzeichnet, daß das Spannelement eine Überwurfmutter (30) ist, die drehbar, aber axial gesichert auf der Lenkwelle (20) angebracht und mit der Nabe (10) auf deren Außenseite verschraubt ist.

2. Befestigung eines Fahrzeuglenkrades an einer Lenkwelle,
mit einer drehfesten Welle/Nabe-Verbindung zwischen einer Nabe (10) des Lenkrades und einem dem Lenkrad zugeordneten Ende der Lenkwelle (20) und
mit einem Spannelement (30), welches eine in der Richtung der Längsachse der Lenkwelle (20) wirksame Formschlußverbindung zwischen der Nabe (10) und der Lenkwelle (20) bildet,
dadurch gekennzeichnet, daß das Spannelement eine Überwurfmutter (30) ist, die drehbar, aber axial gesichert an der Außenseite der Nabe (10) angebracht und mit der Lenkwelle (20) verschraubt ist.

3. Befestigung nach einem der vorhergehenden Ansprüche, dadurch gekennzeichnet, daß die drehfeste Welle/Nabe-Verbindung durch ein Keilwellenprofil (14) auf der Lenkwelle (20) und ein Keilnabenprofil (22) in der Nabe (10) gebildet ist.

4. Befestigung nach einem der Ansprüche 1 und 2, dadurch gekennzeichnet, daß die drehfeste Welle/Nabe-Verbindung durch einen an der Lenkwelle gebildeten Kegel (24) und eine in der Nabe gebildete kegelige Aufnahme (16) gebildet ist.

5. Befestigungsvorrichtung nach einem der Ansprüche 1 und 2, dadurch gekennzeichnet, daß die drehfeste Welle/Nabe-Verbindung durch eine Keilwellenverbindung (14, 22) und zusätzlich durch einen Kegelsitz (16, 24) gebildet ist.
